Europäisches Patentamt

(19) European Patent Office

Office européen des brevets

(11) Publication number: **0 292 078 B1**

(12)                          **EUROPEAN PATENT SPECIFICATION**

(45) Date of publication of patent specification:
25.09.91 Bulletin 91/39

(51) Int. Cl.⁵: **B65G 25/06**

(21) Application number: 88201007.7

(22) Date of filing: 19.05.88

(54) A floor conveyor.

(30) Priority: 20.05.87 NL 8701206

(43) Date of publication of application:
23.11.88 Bulletin 88/47

(45) Publication of the grant of the patent:
25.09.91 Bulletin 91/39

(84) Designated Contracting States:
BE DE ES FR GB IT NL

(56) References cited:
EP-A- 0 158 398
WO-A-84/03686
WO-A-84/03686

(73) Proprietor: HYDRAULIC FLOOR SYSTEMS
B.V.
Tjalk 44
NL-2401 NC Alphen a/d Rijn (NL)

(72) Inventor: Koelman, Geert Jan
Van Bothniaplantsoen 4
NL-7742 WK Coevorden (NL)

(74) Representative: Smulders, Theodorus A.H.J.,
Ir. et al
Vereenigde Octrooibureaux Nieuwe Parklaan
107
NL-2587 BP 's-Gravenhage (NL)

Jouve, 18, rue Saint-Denis, 75001 PARIS

## Description

The present invention relates to a floor conveyor comprising a plurality of juxtaposed groups of floor members, each group consisting of a plurality of juxtaposed floor members mounted for reciprocating sliding movement in longitudinal direction relative to each other, a frame having two crossbeams wherebetween there are provided drive beams extending parallel to the crossbeams, each of said drive beams being connected to a plurality of floor members, and in use being driven in reciprocating movement by drive means comprising hydraulic drive cylinders.

Floor conveyors of this type, also called moving floors, are known in various embodiments. In general, the drive means are operated such that all floor members are moved simultaneously in the transport direction and that subsequently of each group, one or at least less than half of the number of floor members pertaining to that group is pushed back again into the starting position. When thus e.g. the first floor member of each group has been pushed back into the starting position, then the second floor member of each group is pushed back into the starting position, thereafter the third floor member of each group, until all floor members are again in the starting position. Mostly, each group comprises three floor members.

By repeating the above cycle, a load present on the floor is displaced in the transport direction. These floor conveyors can be used both as a stationary unit and be built-in in a truck.

Such floor conveyors have been disclosed e.g. in USP 4,184,587 ; USP 4,144,963 ; European patent application 0,085,735 and European patent application 0,085,736.

Said known floor conveyors comprise a frame with at least two parallel, spaced apart crossbeams extending transversely to the floor members the ends of said crossbeams being connectable to longitudinal girders of a chassis of e.g. a truck. The frame may further comprise separate longitudinal beams connecting the crossbeams.

In the space between the crossbeams, there are provided drive beams for the floor members. When each group comprises three floor members, also three drive beams are provided. Each of the drive beams is coupled to the corresponding floor members of all groups. The first drive beam is e.g. connected to all first floor members of the groups, a second drive beam to all second floor members and a third drive beam to all third floor members.

The drive beams themselves are each connected to an associated slidably mounted tube or rod extending between the crossbeams in the transport direction. At least one of the ends of each tube or rod extends beyond the crossbeam of the frame located adjacent said end and is connected to the piston rod of a hydraulic cylinder.

In order to mount the hydraulic cylinders, the frame is provided with an additional triangular portion and/or of an additional crossbeam.

Although a satisfactorily functioning floor conveyor can thus be obtained, a drawback going with the known conveyor floors is that the frame should have a comparatively long length and hence is comparatively heavy and difficult to handle. Moreover, such a long frame can mostly not be incorporated without anything more in an existing (truck) chassis. Special provisions are then necessary to create sufficient free space for incorporation of the frame and likewise for maintaining the required strength of the chassis.

A floor conveyor of the above described type which however does not need a long frame has been disclosed in WO-A-84/03686. In said known floor conveyor the drive beams are each mounted direct on a corresponding hydraulic cylinder which hydraulic cylinders are mounted underneath the drive beams for reciproceting movement on a piston rod mounted fixedly between the crossbeams. This known construction provides for a comparatively short installation length, but has the drawback that it is not strong enough for use in installations handling heavy loads. The load on the floor conveyor is transmitted via the drive beams direct to the hydraulic cylinders in a direction perpendicular to the direction of movement of the hydraulic cylinders. This will result in bending of the cylinder-pistonrod combination and thus in considerable wear.

It is an object of the present invention to provide a floor conveyor having a comparatively short installation length, which functions effectively, is light and strong and which can be installed in a simple manner.

To that effect according to the invention, a floor conveyor of the above described type is characterized in that each drive beam is mounted on at least one tube or rod extending transversely to the drive beams and being slidable longitudinally in spaced apart guides ; each slidable tube or rod between the guides is provided with a support to which the movable portion of at least one hydraulic drive cylinder is connected, and that there is further provided for each drive cylinder, a frame-connected fixed support to which the stationary portion of the drive cylinder is connected.

In the construction according to the present invention the above mentioned problems are avoided because the drive cylinders themselves do not move to and fro and because any effect of the load on the floor conveyor is not passed on to the cylinders and/or the piston rods, but is taken up by the slidable tubes or rods and their bearings. Thus the construction according to the present invention is much more reliable than the known construction.

Some embodiments of the present invention will now be described, by way of example, with reference to the accompanying drawings, in which :

Fig. 1 is a diagrammatic top view of the frame and the drive means of a prior art floor conveyor ;

Fig. 2 illustrates the principle of the invention by means of a longitudinal section of an example of a floor conveyor according to the present invention ;

Fig. 3 is a diagrammatic top view of an embodiment of a part of a floor conveyor according to the invention ;

Fig. 4 shows a hydraulic drive cylinder adapted for use in a floor conveyor according to the invention ; and

Fig. 5 shows a variant of Fig. 3.

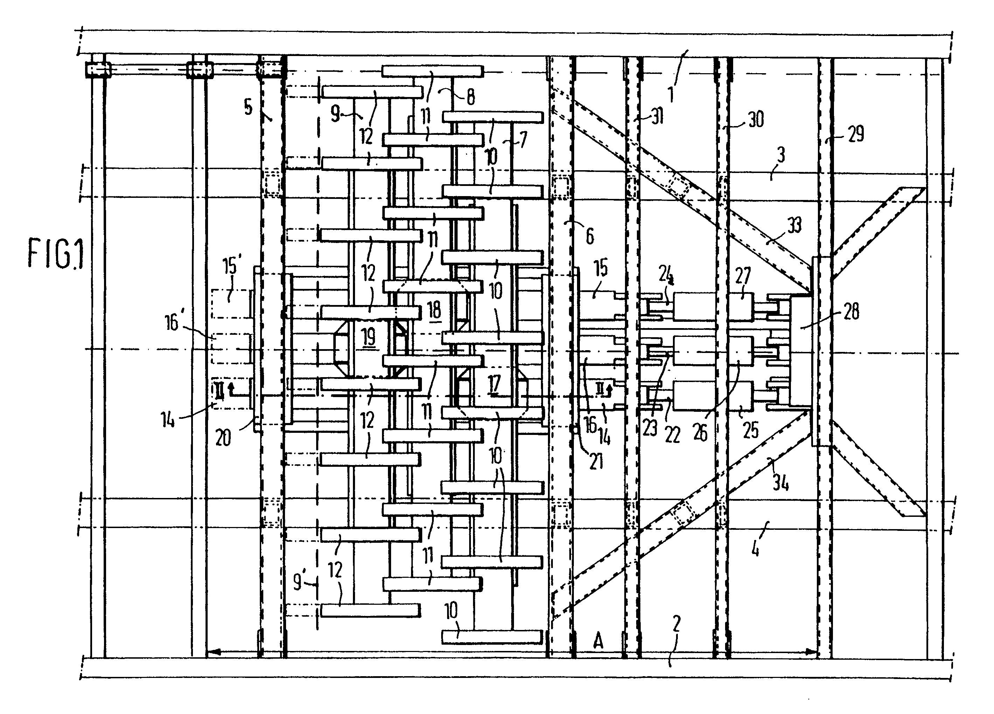

Fig. 1 is a top view of a known conveyor with removed floor members. The floor conveyor shown is incorporated in a chassis comprising two outermost longitudinal girders or edge sections 1, 2 and two intermediate main chassis beams 3, 4. The floor conveyor comprises a frame including two main crossbeams 5, 6, mounted between the edge sections 1, 2 of the chassis lying on the main chassis beams 3, 4 of the chassis.

Extending between the main crossbeams, transversely to the transport direction of the floor conveyor, are three drive beams 7, 8, 9. Each drive beam has a plurality of attachment members 10, 11, 12 for floor members, distributed uniformly along the length of the drive beams.

In this example, the floor members are distributed in groups of three and the first floor member of each group of three is attached to an attachment member 10, the second floor member of each group to an attachment member 11 and the third floor member of each group to an attachment member 12.

The drive beams 7, 8, 9 are each secured to a tube or rod 14, 15, 16 mounted for sliding movement in the transport direction between the main crossbeams, as indicated at 17, 18 and 19.

The tubes or rods are slidable through guides 20, 21 mounted on the main crossbeams.

The tubes or rods extend beyond the guide 21 and are connected with the respective free ends to a piston rod 22, 23, 24 of a hydraulic cylinder 25, 26, 27. The cylinders themselves are attached with the other end to a mounting plate 28, connected to two frame portions 33, 34 extending outwardly towards the main crossbeam 6. The mounting plate may be connected to an additional crossbeam 29. In the example shown, crossbeam 29 does not form part of the frame of the floor conveyor but of the chassis. True, two additional crossbeams 30, 31 are provided in this example between the main crossbeam 6 and the crossbeam 29.

The drive beams are shown in the rest position. By energizing, starting from this position, the three hydraulic cylinders 25, 26, 27 simultaneously, all tubes or rods 14, 15, 16 are moved to the left, as indicated in broken lines at 14', 15', 16'. The associated position of the drive beams is indicated for beam 9 in broken lines at 9'.

Due to the simultaneous energization of the three cylinders, all floor members are moved to the left simultaneously, thereby entraining a load placed on the floor members.

Subsequently, the cylinders 25, 27, 26 are successively energized in opposite direction, so that first the drive beam 7 will move to the right with the floor members attached to the attachment members 10. Subsequently, the same happens with drive beam 8 and drive beam 9. Only a third part of the floor members is then moved, so that the load is not entrained due to the larger friction with the other floor members. Then, again all cylinders are energized simultaneously and the load again slides to the left, etc.

Fig. 1 shows that a considerable free installation length A is required in the chassis for enabling to mount the frame of the floor conveyor. It is necessary to remove various existing crossbeams from the chassis to enable the installation of a floor conveyor. Subsequently, the chassis is again reinforced. Moreover, it is mostly necessary to render the frame of the floor conveyor extra heavy, so that this may also serve as a construction element of the chassis.

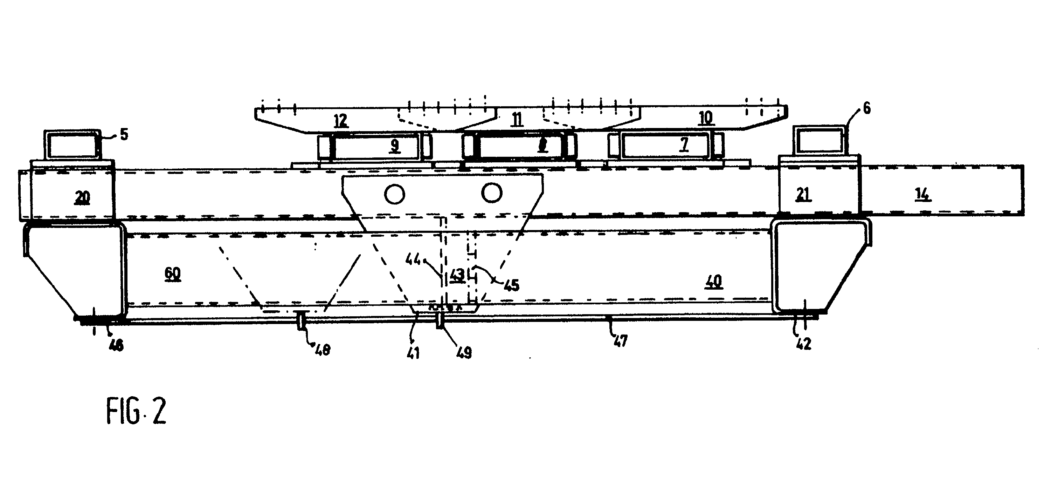

Fig. 2 is a longitudinal section of an example of a conveyor floor according to the invention, showing the principle of the invention. The cross section of Fig. 2 is comparable to that shown in Fig. 1 taken on the line II'-II', but differs therefrom in that Fig. 1 shows a known floor conveyor, whereas Fig. 2 illustrates a floor conveyor according to the present invention. True, Fig. 2 uses the same reference numerals as Fig. 1 as far as corresponding parts are concerned.

Fig. 2 shows guides 20, 21 mounted underneath crossbeams 5, 6 of the frame of a floor conveyor according to the invention for three tubes reciprocatably slidable in the transport direction, one of which is shown at 14.

Secured to each slidable tube is either of the drive beams 7, 8, 9 extending parallel to the crossbeams and each drive beam again carries floor members, not shown, mounted on the top through attachment means 10, 11, 12.

The slidable tube (or rod) 14, as in Fig. 1, is connected to the drive beam 7. Contrary to Fig. 1, the drive cylinder of tube 14, however, is not mounted in the extension of tube 14 but underneath tube 14. This naturally also applies to the slidable tubes on which drive beams 8, 9 are mounted.

To that end, at least one hydraulic cylinder is mounted underneath each of the slidable tubes, extending substantially parallel to the associated tube. Fig. 2 shows the cylinder 40 mounted underneath tube 14 and driving said tube. The cylinder is mounted between a support 41 attached to tube 14 and a fixed support 42. The fixed support can be secured advantageously to the bottom of either of the guides. In the example shown, the fixed support is disposed underneath guide 21 and hence underneath main crossbeam 6. Furthermore, fixed support 42 preferably extends along such a distance transversely to the transport direction (i.e. transversely to the plane of drawing of Fig. 2) that the fixed support may serve as a common support for all drive cylinders.

The supports may have various suitable forms. In the example shown, the fixed support has the form of a plate-bent section on a closed side of which cylinder 40 is mounted. The other drive cylinders are mounted similarly.

The moving support 41 in this example consists of two depending webs 43, one being shown, mounted on either side against tube 14. The webs are connected underneath the tube by a partition 44. The free end of piston rod 45 of the drive cylinder is attached to the partition.

It is observed that the starting point in the foregoing are double-acting drive cylinders. When use is made of single-acting drive cylinders, a second fixed support, as shown at 46, could be used underneath the other guide 20, so underneath main crossbeam 5, and a second single-acting hydraulic cylinder could be employed between support 46 and moving support 41.

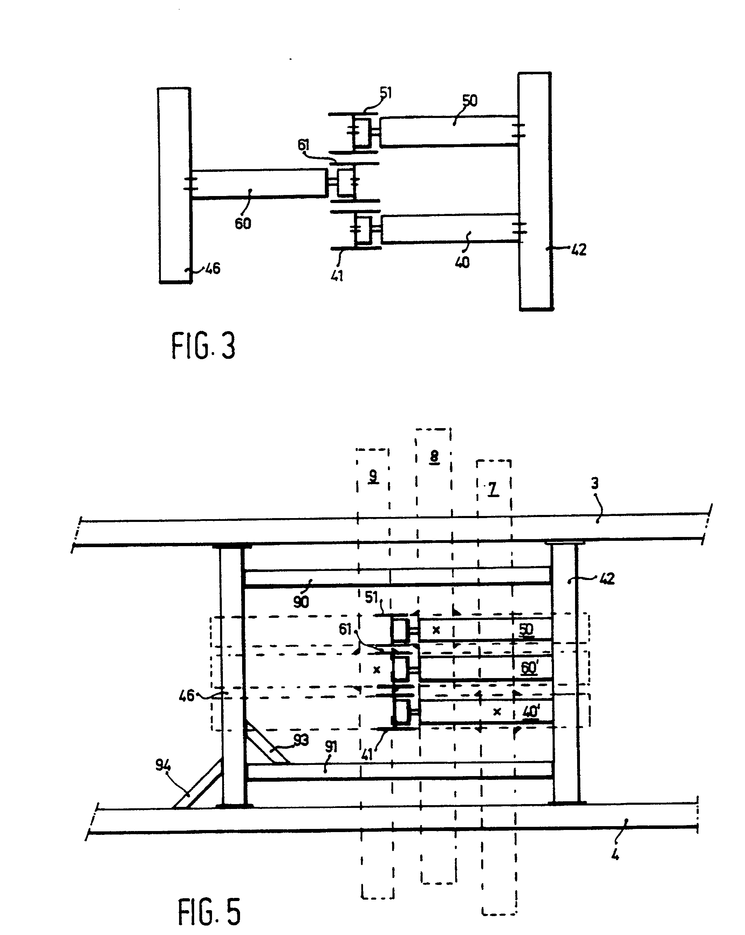

The use of two fixed supports, as shown in Fig. 2, offers the possibility of using single-acting cylinders, as well as the possibility of placing the cylinders alternately between the one fixed support and the associated movable support and the other fixed support and the associated movable support, as shown diagrammatically in Fig. 3. A cylinder 50, driving e.g. drive beam 8, is placed on the one hand between the same fixed support 42 as cylinder 40 and on the other hand the associated movable support 51, mounted on the slidable tube 15, while the cylinder 60 driving drive beam 9 (see also Fig. 2) is mounted between the opposite fixed support 46 and the associated movable support 61, provided on the slidable tube 16.

The configuration shown in Fig. 3 offers the advantage of a good accessibility of the drive cylinders for maintenance operations and for assembly and disassembly.

If desired, a protecting plate or grid or the like can be mounted furthermore against the bottom of the fixed supports, as shown at 47 in Fig. 2. Advantageously, the proximity switches 48, 49 can be mounted on such elements, extending between the fixed supports, said switches being adapted to detect the uttermost positions of a drive cylinder and to transmit signals for the control of valves in the hydraulic control system of the floor conveyor.

A floor conveyor according to the present invention requires considerably less free installation length than the known floor conveyors. A saving of about 50% of the normally required installation length is possible. As already mentioned, fewer provisions on the chassis are required as a result and the frame of the floor conveyor can be lighter.

Furthermore, it is not possible with the known floor conveyors without further increasing the installation length, to use a construction wherein not all cylinders are directly juxtaposed. In the configuration of Fig. 1, cylinder 26 could e.g. only be displaced to a position at the left of the main crossbeam 5, which again leads to a considerable increase in the required installation length.

Naturally, the present invention also offers the possibility, starting from the installation length required for the known floor conveyors, to use the reduction of the installation length possible according to the invention, partly to increase the travel of the hydraulic drive cylinders. This also increases the travel of the drive beams and a fully loaded floor conveyor can be discharged more quickly.

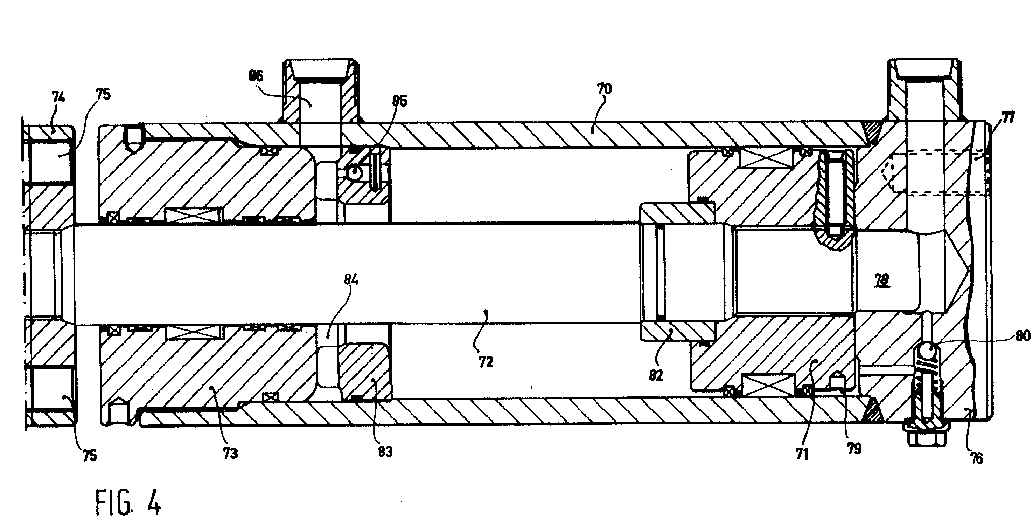

Fig. 4 shows a double-acting hydraulic drive cylinder suitable for use in a floor conveyor according to the present invention. The cylinder comprises a cylindrical housing 70 containing a piston 71 connected to a piston rod 72. The piston rod extends conventionally through a bore of a first cylinder cover 73 and is provided in this example on its free end with a flange 74, which can be attached with a number of bolts to a support in a simple manner, for which purpose bolt holes 75 are provided.

The other side of the cylinder is shut off by a second cover 76. Said cover contains a plurality of threaded blind bores 77, so that the cylinder can be mounted on a support in a simple manner.

Such a simple mounting by means of bolts extending into bolt holes in a flange or a cover is not possible in the known floor conveyors, because this is prevented at least on one cylinder end by the slidable tube present at that location, and by the deflection occurring, in operation, of the long frame of the known floor conveyor. The latter requires in the known floor conveyors comparatively expensive pivoting attachments for the cylinders.

Another drawback of the known floor conveyors is that these produce rather much noise, which is partly due to the pistons of the drive cylinders impacting the cylinder covers on the end of the travel.

The cylinder shown in Fig. 4 is therefore damped hydraulically on both sides. On the one hand, this is effected by the head 78 of the piston rod extending beyond piston 71 and fitting in a narrowed bore, in cooperation with a peripheral annular space 79 formed on the same side of the piston, said space being in communication through a channel with non-return valve 80 with an oil supply channel 81.

On the other hand, the hydraulic damping takes place by coaction of a narrowed piston head 82, fitting in a bore in a damping ring 83. Damping ring 83 is spaced apart from cover 73 and the resulting disc-shaped space 84 communicates through a channel with non-return valve 85 with the rest of the interior of the cylinder and also with an oil supply channel 86.

An additional advantage of the hydraulic damping is that the floor conveyor can be operated more quickly without excessive noise or greater risk of wear, which together with the possibility to select a larger travel, renders a floor conveyor according to the present invention a highly effective floor conveyor.

It is observed that, after reading the above, various constructive modifications will readily occur to one skilled in the art. For instance, in a practical situation, two fixed supports 42, 46 are used advantageously, as shown in Figs. 2 or 3, and the length of these fixed supports is chosen so that the ends of the fixed supports can be connected to the main chassis beams, e.g. by welding, whether or not in combination with stays, tie plates and the like.

Besides, longitudinal beams can be welded advantageously between the two fixed supports 42, 46, thereby producing a rectangular subframe, thus rendering other longitudinal girders in the frame of the floor conveyor superfluous or enabling other longitudinal girders to be of lighter construction.

Likewise, such longitudinal girders ensure the rectilinear movement of the slidable tubes or rods and the cylinders and the floor members.

This is shown diagrammatically in Fig. 5, wherein both the longitudinal beams 90, 91, connecting the fixed supports, and the ends of the fixed supports welded at 92 onto the main chassis beams are shown. Both features can naturally be used independently from one another. At 93 and 94 are shown, by way of example, additional stays for one angular point. For the sake of clearness, Fig. 5 shows in broken lines the drive beams without the attachment means for the floor members and the slidable tubes or rods driving these drive beams.

According to another modification, the supports 42, 46 could be combined with the guides 21, 20 to a single element. Such a combination element could be constructed in such a manner that there is provided between the two tubes or rods an interspace wherein extends the then laterally extending movable support of at least one tube or rod and wherein an associated drive cylinder is placed.

## Claims

1. A floor conveyor comprising a plurality of juxtaposed groups of floor members, each group consisting of a plurality of juxtaposed floor members mounted for reciprocating sliding movement in longitudinal direction relative to each other ; a frame having two crossbeams (5, 6) between which there are provided drive beams (7, 8, 9) extending parallel to the crossbeams (5, 6), each drive beam (7, 8, 9) being connected to a plurality of floor members and in use being driven in reciprocating movement by drive means comprising hydraulic drive cylinders, characterized in that each drive beam (7, 8, 9) is mounted on at least one tube or rod (14) extending transversely to the drive beams (7, 8, 9) and being slidable longitudinally in spaced apart guides (20, 21) ; each slidable tube or rod (14, 15, 16) between the guides is provided with a support (41, 51, 61) to which the movable portion of at least one hydraulic drive cylinder (40, 50, 60) is connected, an that there is further provided for each drive cylinder (40, 50, 60), a frame-connected fixed support (42 ; 46) to which the stationary portion of the drive cylinder (40, 50, 60) is connected.

2. A floor conveyor as claimed in claim 1, characterized in that the fixed support (42) is a first section extending parallel to the crossbeams (5, 6) and designed as a common fixed support for at least two drive cylinders.

3. A floor conveyor as claimed in claim 2, characterized in that a similar second section extending parallel to the crossbeams (5, 6) is provided on the common fixed support-averted side of the support (41, 51, 61) disposed on the slidable tube or rod (14).

4. A floor conveyor as claimed in claim 3, characterized in that the second section (46) is constructed as a fixed support (46) for at least one of the drive cylinders (40, 50, 60).

5. A floor conveyor as claimed in claim 4, characterized in that the drive cylinders (40, 50, 60) are double-acting and are connected alternately to the one, and the other fixed support (42 ; 46), respectively.

6. A floor conveyor as claimed in any of the preceding claims, characterized in that the fixed support (42 ; 46) for a drive cylinder (40, 50, 60) is mounted underneath the guide (20, 21) for the associated slidable tube or rod (14).

7. A floor conveyor as claimed in any one of claims 3-6, characterized in that the first section and the second section are each mounted underneath one of the spaced apart guides (20, 21), said guides being mounted underneath the crossbeams (5, 6) of the frame.

8. A floor conveyor as claimed in any one of claims 3-7, characterized in that the ends of the first and the second section are connectable to a longitudinal chassis beam (3, 4) of a chassis taking up the floor conveyor.

9. A floor conveyor as claimed in any one of claims 3-8, characterized in that the first and the second section are interconnected by at least one longitudinal element (90, 91) to form a subframe.

10. A floor conveyor as claimed in any of the preceding claims, characterized in that a support (41, 51, 61) mounted on a slidable tube or rod (14) consists of depending webs (43) provided on either side of the tube or rod (14), said webs being connected by a partition (44).

11. A floor conveyor as claimed in any one of claims 3-10, characterized in that protecting means (47) are provided underneath the first and second section.

12. A floor conveyor as claimed in any one of claims 3-11, characterized by elements extending underneath the first and second section and being connected thereto and supporting at least one proximity switch (48, 49) present for each hydraulic cylinder (40, 50, 60).

13. A floor conveyor as claimed in any of the preceding claims, characterized in that the drive cylinders (40, 50, 60) are cylinders damped hydraulically on two sides.

14. A floor conveyor as claimed in any of the preceding claims, characterized in that the moving portion of each hydraulic cylinder (40,50,60) carries a substantially flat mounting plate (74) having bolt holes (75) and that the other portion of the hydraulic cylinder has a substantially flat end plate (76) having a plurality of threaded bores (77).

**Patentansprüche**

1. Bodenfördereinrichtung mit einer Vielzahl nebeneinander angeordneter Gruppen von Bodenelementen, wobei jede Gruppe aus einer Vielzahl von nebeneinander angeordneten Bodenelementen besteht, die für eine Gleitbewegung hin und her in Längsrichtung relativ zueinander montiert sind ; einem Rahmen mit zwei Querbalken (5, 6), zwischen denen Antriebsbalken (7, 8, 9) vorgesehen sind, die sich parallel zu den Querbalken (5, 6) erstrecken, wobei jeder Antriebsbalken (7, 8, 9) mit einer Vielzahl von Bodenelementen verbunden ist und im Betrieb durch eine Antriebseinrichtung in eine Hin- und Herbewegung angetrieben wird, wobei die Antriebseinrichtung hydraulische Antriebszylinder umfaßt, dadurch gekennzeichnet, daß jeder Antriebsbalken (7, 8, 9) an mindestens einem Rohr oder einer Stange (14) montiert ist, das bzw. die sich transversal zu den Antriebsbalken (7, 8, 9) erstrecken und in Längsrichtung in voneinander beabstandeten Führungen (20, 21) gleitbar ist, wobei jedes gleitbare Rohr oder jede gleitbare Stange (14, 15, 16) zwischen den Führungen mit einer Halterung (41, 51, 61) versehen ist, mit der der bewegliche Abschnitt von mindestens einem hydraulischen Antriebszylinder (40, 50, 60) verbunden ist, und daß weiterhin für jeden Antriebszylinder (40, 50, 60) eine mit einem Rahmen verbundene fixierte Halterung (42 ; 46) vorgesehen ist, mit der der stationäre Abschnitt des Antriebszylinders (40, 50, 60) verbunden ist.

2. Bodenfördereinrichtung nach Anspruch 1, dadurch gekennzeichnet, daß die fixierte Halterung (42) ein erster Teil ist, der sich parallel zu den Querbalken (5, 6) erstreckt und als eine gemeinsame fixierte Halterung für mindestens zwei Antriebszylinder konstruiert ist.

3. Bodenfördereinrichtung nach Anspruch 2, dadurch gekennzeichnet, daß ein ähnlicher zweiter Teil, der sich parallel zu den Querbalken (5, 6) erstreckt, an der gemeinsamen fixierten halterungsabgewandten Seite der Halterung (41, 51 61) vorgesehen ist, die an dem gleitbaren Rohr oder der gleitbaren Stange (14) angeordnet ist.

4. Bodenfördereinrichtung nach Anspruch 3, dadurch gekennzeichnet, daß der zweite Teil (46) als eine fixierte Halterung (46) für mindestens einen der Antriebszylinder (40, 50, 60) aufgebaut ist.

5. Bodenfördereinrichtung nach Anspruch 4, dadurch gekennzeichnet, daß die Antriebszylinder (40, 50, 60) zweifach wirkend sind und abwechseind mit der einen bzw. der anderen fixierten Halterung (42 ; 46) verbunden sind.

6. Bodenfördereinrichtung nach irgendeinem der vorangehenden Ansprüche, dadurch gekennzeichnet, daß die fixierte Halterung (42, 46) für einen Antriebszylinder (40, 50, 60) unterhalb der Führung (20, 21) für das zugehörige gleitbare Rohr oder die gleitbare Stange (14) montiert ist.

7. Bodenfördereinrichtung nach irgendeinem der Ansprüche 3 bis 6, dadurch gekennzeichnet, daß der erste Teil und der zweite Teil jeweils unterhalb einer der voneinander beabstandeten Führungen (20, 21) montiert ist, wobei die Führungen unterhalb der Querbalken (5, 6) des Rahmens montiert sind.

8. Bodenfördereinrichtung nach irgendeinem der Ansprüche 3 bis 7, dadurch gekennzeichnet, daß die Enden des ersten und des zweiten Teils mit einem länglichen Gehäusebalken (3, 4) eines Gehäuses verbindbar sind, das die Bodenfördereinrichtung aufnimmt.

9. Bodenfördereinrichtung nach irgendeinem der Ansprüche 3 bis 8, dadurch gekennzeichnet, daß der erste und der zweite Teil durch mindestens ein Längselement (90, 91) miteinander verbunden sind, um einen Unterrahmen zu bilden.

10. Bodenfördereinrichtung nach irgendeinem der vorangehenden Ansprüche, dadurch gekennzeichnet, daß eine Halterung (41, 51, 61), die an einem gleitbaren Rohr oder einer gleitbaren Stange (14) montiert ist, aus abhängigen Netzen (43) besteht, die an jeder Seite des Rohrs oder der Stange (14) vorgesehen sind, wobei die Netze durch eine Trennwand (44) verbunden sind.

11. Bodenfördereinrichtung nach irgendeinem der Ansprüche 3 bis 10, dadurch gekennzeichnet, daß Schutzeinrichtungen (47) unterhalb des ersten und des zweiten Teils vorgesehen sind.

12. Bodenfördereinrichtung nach irgendeinem der Ansprüche 3 bis 11, gekennzeichnet durch Elemente, die sich unterhalb des ersten und des zweiten Teils erstrecken und damit verbunden sind und zumindest einen Berührungsschalter (48, 49) halten, der für jeden hydraulischen Zylinder (40, 50, 60) vorhanden ist.

13. Bodenfördereinrichtung nach irgendeinem der vorangehenden Ansprüche, dadurch gekennzeichnet, daß die Antriebszylinder (40, 50, 60) Zylinder sind, die an zwei Seiten hydraulisch gedämpft sind.

14. Bodenfördereinrichtung nach irgendeinem der vorangehenden Ansprüche, dadurch gekennzeichnet, daß der sich bewegende Abschnitt jedes hydraulischen Zylinders (40, 50, 60) eine im wesentlichen flache Montageplatte (74) mit Bolzenlöchern (75) trägt, und daß der andere Abschnitt des hydraulischen Zylinders eine im wesentlichen flache Endplatte (76) mit einer Vielzahl von Gewindebohrungen (77) aufweist.

## Revendications

1. Transporteur à plancher comprenant une pluralité de groupes juxtaposés d'éléments de plancher, chaque groupe se composant d'une pluralité d'éléments juxtaposés de plancher montés pour exécuter un mouvement alternatif de glissement en direction longitudinale les uns par rapport aux autres ; un bâti ayant deux traverses (5, 6) entre lesquelles sont prévues des poutres d'entraînement (7, 8, 9) s'étendant parallèlement aux traverses (5, 6), chaque poutre d'entraînement (7, 8, 9) étant reliée à une pluralité d'éléments de plancher et étant, pendant l'utilisation, entraînée d'un mouvement alternatif par des moyens d'entraînement comprenant des vérins hydrauliques d'entraînement, caractérisé en ce que chaque poutre d'entraînement (7, 8, 9) est montée sur au moins un tube ou une tige (14) s'étendant transversalement aux poutres d'entrainement (7, 8, 9) et pouvant coulisser longitudinalement dans des guides (20, 21) espacés; chaque tube ou tige (14, 15, 16) pouvant coulisser est pourvu entre les guides d'un support (41, 51, 61) auquel est attachée la partie mobile d'au moins un vérin hydraulique d'entraînement (40, 50, 60), et en ce qu'il existe en outre pour chaque vérin d'entraînement (40, 50, 60) un support fixe (42 ; 46) réuni au bâti et auquel la partie stationnaire du vérin d'entraînement (40, 50, 60) est attachée.

2. Transporteur à plancher de la revendication 1, caractérisé en ce que le support fixe (42) est un premier profilé s'étendant parallèlement aux traverses (5, 6) et conçu comme un support fixe commun à au moins deux vérins d'entraînement.

3. Transporteur à plancher de la revendication 2 caractérisé en ce qu'un second profilé similaire s'étendant parallèlement aux traverses (5, 6) est prévu sur le côté éloigné du support fixe commun du support (41, 51, 61) disposé sur le tube ou la tige (14) pouvant coulisser.

4. Transporteur à plancher de la revendication 3 caractérisé en ce que le second profilé (46) est construit comme un support fixe (46) pour l'un au moins des vérins d'entraînement (40, 50, 60).

5. Transporteur à plancher selon la revendication 4, caractérisé en ce que les vérins d'entraînement (40, 50, 60) sont à double effet et sont reliés alternativement et respectivement à l'un et à l'autre support fixe (42 ; 46).

6. Transporteur à plancher selon l'une quelconque des revendications précédentes, caractérisé en ce que le support fixe (42 ; 46) pour un vérin d'entraînement (40, 50, 60) est monté en dessous du guide (20, 21) du tube ou de la tige (14) pouvant coulisser qui lui est associé.

7. Transporteur à plancher selon l'une quelconque des revendications 3 à 6, caractérisé en ce que le premier profilé et le second profilé sont montés chacun en dessous de l'un des guides espacés (20, 21), ces guides étant montés en dessous des traverses (5, 6) du bâti.

8. Transporteur à plancher selon l'une quelconque des revendications 3 à 7, caractérisé en ce que les extrémités du premier profilé et du second profilé peuvent être reliées à une poutre (3, 4) longitudinale d'un châssis portant le transporteur à plancher.

9. Transporteur à plancher selon l'une quelconque des revendications 3 à 8, caractérisé en ce que le premier profilé et le second profilé sont interconnectés par au moins un élément longitudinal (90, 91) pour constituer un sous-bâti.

10. Transporteur à plancher selon l'une quelconque des revendications précédentes, caractérisé en ce qu'un support (41, 51, 61) monté sur un tube ou sur une tige (14) pouvant coulisser, se compose de jupes pendantes (43) prévues sur l'un et l'autre côté du tube ou de la tige (14), ces jupes étant reliées par une cloison (44).

11. Transporteur à plancher selon l'une quelconque des revendications 3 à 10, caractérisé en ce que des moyens de protection (47) sont prévus en dessous du premier profilé et du second profilé.

12. Transporteur à plancher selon l'une quelconque des revendications 3 à 11, caractérisé par des éléments s'étendant en dessous du premier profilé et du second profilé et étant reliés à ces derniers et portant au moins un interrupteur de proximité (48, 49) disposé pour chaque vérin hydraulique (40, 50, 60).

13. Transporteur à plancher selon l'une quelconque des revendications précédentes, caractérisé en ce que les vérins d'entraînement (40, 50, 60) sont des vérins amortis hydrauliquement sur les deux côtés.

14. Transporteur à plancher selon l'une quelconque des revendications précédentes, caractérisé en ce que la partie mobile de chaque vérin hydraulique (40, 50, 60) porte une plaque de montage (74) substantiellement plate ayant des trous de boulon (75) et en ce que l'autre partie du vérin hydraulique a une plaque d'extrémité (76) substantiellement plate ayant une pluralité de trous taraudés (77).

FIG.1

EP 0 292 078 B1

FIG. 2

FIG. 3

FIG. 5

FIG. 4

EP 0 292 078 B1